# FASCICULE DE BREVET EUROPEEN

(11) **EP 0 699 997 B1**
(45) Date de publication et mention de la délivrance du brevet: **07.10.1998**
(21) Numéro de dépôt: 95401883.4
(22) Date de dépôt: 11.08.1995
(51) Int. Cl.: G06F 11/22

(54) **Procédé et dispositif pour l'identification de pannes dans un système complexe**
Verfahren zur Fehleridentifizierung in einem komplexen System
Method for identification of faults in a complex system

(30) Priorité: 29.08.1994 FR 9410363
(43) Date de publication de la demande: 06.03.1996
(73) Titulaire: AEROSPATIALE SOCIETE NATIONALE INDUSTRIELLE, 75016 Paris (FR)
(72) Inventeur: Beaujard, Jean-Philippe, F-31100 Toulouse (FR); Fernekes, André, F-31410 Lavernose (FR)
(74) Mandataire: Bonnetat, Christian

(56) Documents cités:
- EP-A- 0 455 442

## Description

La présente invention concerne un procédé pour l'identification de pannes dans un système complexe et un procédé pour associer dans un tel système complexe des informations opérationnelles et des informations de panne, ainsi qu'un dispositif pour la mise en oeuvre de ces procédés.

Dans le cadre de la présente invention, on entend par système complexe, un système comportant une pluralité de composants et de calculateurs présentant de nombreuses interconnexions. De plus, dans un tel système, en particulier pour des raisons pratiques, lesdits composants et lesdits calculateurs sont généralement reliés à des sources d'énergie communes, ce qui augmente évidemment le nombre de ces interconnexions. De tels systèmes complexes existent dans des domaines d'activité très variés, comme par exemple dans l'industrie, dans l'automobile ou dans l'aviation.

Chacun desdits calculateurs surveille les calculateurs et les composants auxquels il est relié et il est susceptible d'émettre en fonction de cette surveillance des informations de panne susceptibles d'être utilisées par des opérateurs chargés de la maintenance dudit système complexe, ainsi que des informations opérationnelles destinées aux utilisateurs dudit système.

En raison des nombreuses interconnexions existantes, un fonctionnement défectueux d'un composant engendre des effets directs ou indirects sur d'autres composants du système de sorte qu'une seule panne peut être à l'origine d'une multitude d'informations de panne émises par des calculateurs différents. Le document EP-A-0 455 442 décrit un tel système et propose de regrouper les messages d'erreur ayant une origine commune et isole le composant responsable de ces messages d'erreur.

De même, un arrêt temporaire ou définitif d'une source d'énergie peut engendrer, au niveau des composants reliés à cette source d'énergie, une pluralité d'effets qui peuvent être assimilés à des pannes.

C'est pourquoi, en raison du nombre important d'informations à traiter, la maintenance d'un tel système complexe est le plus souvent longue, difficile et très coûteuse.

Cette maintenance est généralement effectuée par plusieurs opérateurs de maintenance, dont chacun est spécialisé dans la réparation d'un ou de plusieurs types particuliers de composants. Ces opérateurs de maintenance ne s'intéressent donc qu'aux composants qu'ils connaissent et ils n'ont pas une vue globale de tout le système et en particulier de toutes les interconnexions existantes, ce qui les oblige souvent à traiter séparément des informations de panne qui ont pour origine la même panne.

De plus, pour effectuer la maintenance, ces opérateurs utilisent une documentation spécifique qui est nécessairement complexe en raison de la complexité du système, de sorte que la recherche documentaire qui doit être effectuée lors de la maintenance est souvent longue et difficile.

En outre, d'une part, cette documentation n'est pas toujours mise à jour immédiatement au fur et à mesure de l'évolution du système et, d'autre part, elle n'est pas toujours disponible à l'endroit où est effectuée la maintenance, ce qui oblige alors les opérateurs de maintenance à interpréter tous les effets directs ou indirects d'une panne. De telles interprétations entraînent souvent de faux diagnostics et donc des opérations de maintenance inutiles et coûteuses.

La présente invention a pour objet de remédier à ces inconvénients. Elle concerne à titre principal un procédé permettant, à partir d'une synthèse de toutes les informations de panne émises dans un système complexe, d'identifier les composants effectivement en panne.

A cette fin, selon l'invention telle que revendiquée dans la revendication 1, le procédé pour l'identification de pannes dans un système complexe comportant une pluralité d'éléments connectés ensemble est remarquable en ce que :
a) on divise ledit système complexe en une pluralité d'ensembles d'éléments, chacun desdits ensembles étant susceptible d'émettre, lors d'une panne concernant directement ou indirectement au moins l'un des éléments de cet ensemble, une information de panne comportant une indication d'identification, désignant l'élément que l'ensemble considère être en panne, et une indication d'origine, désignant ledit ensemble d'émission ;
b) on centralise toutes les informations de panne émises ;
c) pour les informations de panne émises pendant une durée prédéterminée :
   - on regroupe, respectivement dans des premiers groupes de données, les informations de panne pour lesquelles l'indication d'identification d'une desdites informations de panne correspond à l'indication d'origine d'une autre desdites informations de panne et, pour chaque premier groupe de données ainsi formé, on y ajoute les informations de panne, non déjà regroupées, pour lesquelles l'indication d'identification correspond à l'indication d'identification d'une desdites informations de panne du groupe ; et
   - on regroupe, respectivement dans des seconds groupes de données, les informations de panne non regroupées dans lesdits premiers groupes de données pour lesquelles les indications d'identification sont les mêmes, chacun desdits premiers et seconds groupes de données ainsi formés comportant des informations de panne ayant pour origine la panne d'un seul et même élément ; et
d) on détermine, pour chacun desdits premiers et seconds groupes de données et pour chaque information de panne qui n'a pas pu être regroupée, l'élément effectivement en panne qui est à l'origine des informations de panne considérées, cet élément étant :
   - pour les informations de panne qui n'ont pas pu être regroupées, l'élément désigné par l'indication d'identification ;
   - pour les premiers groupes de données, soit l'élément désigné par l'indication d'identification qui, le cas échéant, ne correspond à aucune indication d'origine du groupe, soit, lorsqu'une information de panne du groupe comporte une indication d'identification et une indication d'origine identiques, l'élément désigné par ces indications identiques ; et
   - pour les seconds groupes de données, l'élément désigné de façon commune par les indications d'identification.

Ainsi, grâce à l'invention, les éléments effectivement en panne sont directement déterminés, ce qui entraîne évidemment un gain important en temps et donc une réduction du coût de maintenance.

De plus, par le regroupement des informations effectué lors de la recherche d'un élément en panne, on connaît les informations résultant directement ou indirectement d'une panne déterminée, lesquelles informations n'ont donc pas à être prises en compte lors de la maintenance.

De façon avantageuse, on définit ladite durée prédéterminée de manière que les considérations suivantes soient vérifiées :
- deux informations de panne espacées d'un temps supérieur à ladite durée prédéterminée sont toujours indépendantes l'une de l'autre ; et
- deux informations de panne espacées d'un temps inférieur ou égal à ladite durée prédéterminée sont susceptibles d'être dépendantes l'une de l'autre, c'est-à-dire elles sont susceptibles d'avoir pour origine la même panne.

Comme rappelé précédemment, on engendre dans un système complexe, en plus desdites informations de panne, des informations opérationnelles, c'est-à-dire des informations qui sont liées à l'utilisation des différents éléments du système, par exemple des alarmes.

De telles informations opérationnelles sont bien entendu émises lors de pannes et elles sont susceptibles dans un tel cas de présenter à l'utilisateur de façon objective la situation réelle pour qu'il puisse prendre les mesures nécessaires et appropriées que requiert cette situation. Il est évidemment important dans ce cas de connaître la panne qui est à l'origine même indirectement de ces informations opérationnelles.

La présente invention concerne également un procédé permettant d'associer aux informations de panne des informations opérationnelles correspondantes, lesdites informations opérationnelles comportant dans le cadre de la présente invention à la fois une indication d'identification et une indication d'origine, comme les informations de panne précitées.

Selon l'invention, ledit procédé est remarquable en ce que :
a) on centralise les informations opérationnelles conjointement avec les informations de panne ; et
b) pour les informations émises pendant une durée prédéfinie, on associe lesdites informations opérationnelles, soit aux informations de panne présentant une même indication d'identification, soit aux informations de panne pour lesquelles l'indication d'origine correspond à l'indication d'identification desdites informations opérationnelles.

De préférence, ladite durée prédéterminée et ladite durée prédéfinie sont identiques.

De façon avantageuse, chacune desdites informations opérationnelles et de panne comporte de plus une indication d'évaluation de panne indiquant l'importance de la panne par rapport au fonctionnement du système, et on associe une information opérationnelle à une information de panne si, en plus des conditions définies dans l'étape b) du procédé cité précédemment, les indications d'évaluation de panne respectives sont identiques. Une telle indication d'évaluation de panne permet de plus à l'utilisateur du système de prendre les mesures réellement adaptées à l'existence de la panne correspondante.

A cet effet, avantageusement, l'indication d'évaluation de panne est susceptible d'indiquer deux niveaux de panne différents, dont l'un correspond à une panne majeure, pour laquelle le système n'est plus en mesure d'assurer sa fonction et dont l'autre correspond à une panne mineure, pour laquelle, malgré la panne, le système est encore en mesure d'assurer sa fonction.

Bien entendu, l'indication d'évaluation de panne peut présenter d'autres informations et/ou elle peut être affinée, en étant par exemple susceptible d'indiquer d'autres niveaux de panne, intermédiaires entre la panne majeure et la panne mineure.

La présente invention concerne également un dispositif pour la mise en oeuvre de l'un quelconque des procédés précités.

De façon avantageuse, ledit dispositif comporte :
- des ensembles d'éléments comprenant des composants élémentaires et au moins un calculateur relié auxdits composants élémentaires, ledit calculateur étant susceptible d'identifier un élément soumis directement ou indirectement à une panne ; et
- un calculateur central, relié au calculateur de chacun desdits ensembles et recevant des informations de panne et des informations opérationnelles desdits calculateurs, ledit calculateur central regroupant lesdites informations de panne et déterminant à partir de ces informations de panne regroupées les éléments effectivement en panne, et ledit calculateur central étant de plus susceptible d'associer des informations opérationnelles à des informations de panne correspondantes.

Bien entendu, lesdits calculateurs peuvent transmettre directement les informations appropriées audit calculateur central. Toutefois, de façon avantageuse, ledit calculateur central peut également comporter une mémoire dans laquelle sont stockées les différentes informations de panne susceptibles d'être utilisées par ledit calculateur central, lesdits calculateurs étant susceptibles de transmettre audit calculateur central des signaux codés permettant à ce dernier d'accéder aux informations stockées appropriées.

Avantageusement, ledit calculateur central comporte en outre une base de temps pour dater toutes les informations reçues, ce qui permet d'effectuer la synthèse des informations reçues non immédiatement, mais ultérieurement, en enregistrant à cet effet lesdites informations avec leur date de réception.

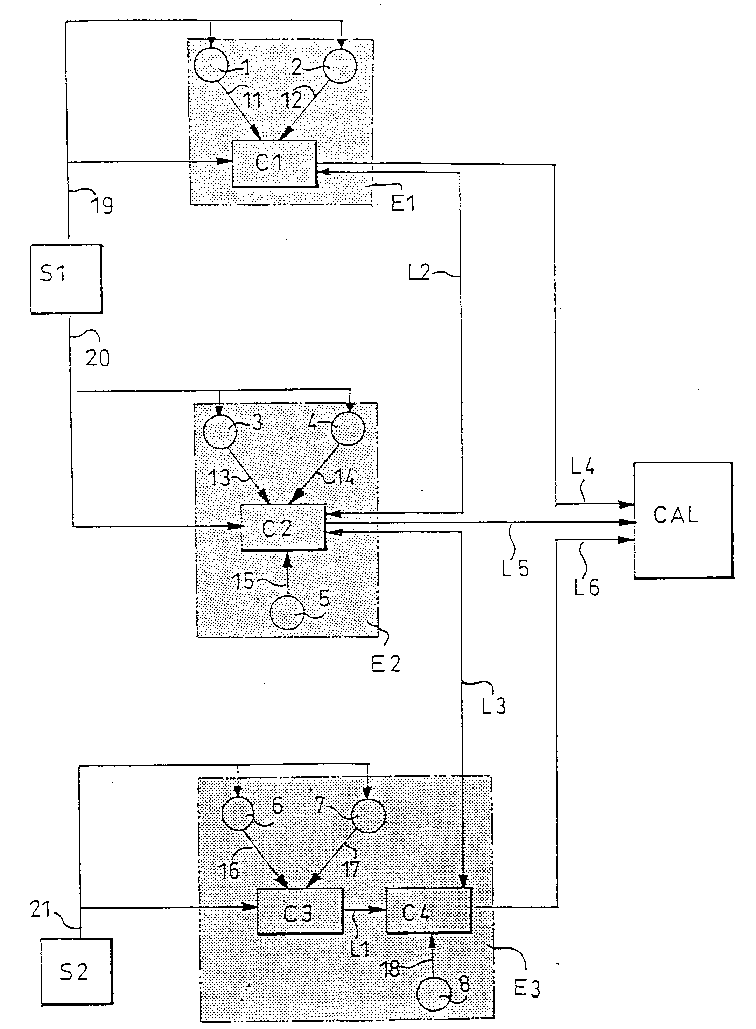

La figure unique du dessin annexé fera bien comprendre comment l'invention peut être réalisée. Cette figure montre le schéma synoptique d'un dispositif conforme à l'invention pour identifier des pannes dans un système complexe.

Le dispositif conforme à l'invention et représenté sur l'unique figure du dessin est destiné, d'après sa fonction principale, à identifier des pannes dans un système complexe.

Par système complexe, on entend dans le cadre de la présente invention, comme mentionné précédemment, un système comportant une pluralité d'éléments formés de composants élémentaires 1 à 8 et de calculateurs C1 à C4, lesdits éléments présentant de très nombreuses interconnexions que l'on précisera ci-après. Par composant élémentaire, on entend en particulier tout appareil ou élément nécessaire au fonctionnement du système complexe et monté à cet effet dans ledit système complexe. En ce qui concerne le système complexe, il peut s'agir par exemple d'un aéronef ou de tout autre système présentant les caractéristiques précitées.

De plus, dans un tel système complexe, lesdits éléments sont pour la plupart alimentés par des sources d'énergie S1 et S2 qui sont généralement reliées à plusieurs desdits éléments, ce qui augmente évidemment le nombre d'interconnexions.

En raison de ces nombreuses interconnexions, un fonctionnement défectueux d'un élément engendre des actions directes ou indirectes sur d'autres éléments du système de sorte qu'une seule panne peut être à l'origine de très nombreux effets directs ou indirects, qui sont susceptibles d'être assimilés à des pannes.

De même, un arrêt temporaire ou définitif d'une source d'énergie peut engendrer, au niveau des éléments reliés à cette source d'énergie, une pluralité d'effets qui peuvent eux aussi être assimilés à des pannes.

Le dispositif conforme à l'invention a pour but de remédier à ces inconvénients, en permettant de déterminer, d'une part, les éléments effectivement en panne et, d'autre part, les effets directs et indirects de telles pannes.

A cet effet, ledit dispositif comporte :
- des ensembles E1 à E3 constitués d'éléments du système complexe, ainsi que, si nécessaire, d'éléments agencés de façon spécifique pour la mise en oeuvre de l'invention ; et
- un calculateur central CAL relié à ces ensembles E1 à E3.

Chacun desdits ensembles E1 à E3, qui regroupe plusieurs composants du système, comporte au moins un calculateur C1 à C4, lesdits calculateurs étant soit des calculateurs existant dans le système, soit des calculateurs agencés de façon spécifique pour la mise en oeuvre de la présente invention.

De façon plus précise, dans l'exemple représenté sur la figure du dessin :
- l'ensemble E1 comporte :
   . le calculateur C1, et
   . les composants 1 et 2 reliés audit calculateur C1 respectivement par l'intermédiaire de liaisons 11 et 12 ;
- l'ensemble E2 comporte :
   . le calculateur C2, et
   . les composants 3, 4 et 5 reliés audit calculateur C2 respectivement par l'intermédiaire de liaisons 13, 14 et 15 ; et
- l'ensemble E3 comporte :
   . les calculateurs C3 et C4 reliés ensemble par l'intermédiaire d'une liaison L1, et
   . les composants 6 et 7 reliés audit calculateur C3 respectivement par l'intermédiaire de liaisons 16 et 17 et le composant 8 relié audit calculateur C4 par l'intermédiaire d'une liaison 18.

Ledit système complexe comporte par ailleurs, pour son fonctionnement, les sources d'énergie S1 et S2. La source d'énergie S1 est reliée, d'une part, aux éléments de l'ensemble E1 par l'intermédiaire d'une liaison 19 divisée en correspondance et, d'autre part, aux éléments de l'ensemble E2, à l'exception du composant 5, par l'intermédiaire d'une liaison 20 également divisée en correspondance. La source d'énergie S2, quant à elle, est reliée par l'intermédiaire d'une liaison 21 formée de façon adéquate, aux éléments de l'ensemble E3, à l'exception du composant 8 et du calculateur C4 qui est par exemple muni d'une source d'énergie intégrée non représentée.

Lesdits composants 5 et 8 comportent par exemple pour leur fonctionnement des sources d'énergie spécifiques non représentées ou ne nécessitent pour leur fonctionnement aucune source d'énergie.

Tous les composants d'un ensemble E1, E2 ou E3 sont donc reliés à au moins un calculateur dudit ensemble. Lesdits calculateurs sont de plus reliés entre eux. Ainsi, le calculateur C2 est relié, d'une part, au calculateur C1 par une liaison L2 et, d'autre part, au calculateur C4 par une liaison L3. D'autres liaisons sont bien entendu envisageables. Toutefois, pour des raisons de simplification du dessin, on se limite auxdites liaisons L2 et L3 entre les différents calculateurs.

Par ailleurs, on notera, bien que cela ne soit pas le cas dans l'exemple représenté, que l'on peut envisager des liaisons entre des composants et des calculateurs d'ensembles différents.

Lesdits calculateurs C1 à C4 surveillent les composants et les calculateurs auxquels ils sont reliés. De plus, au moins un calculateur par ensemble est relié au calculateur central CAL, afin de pouvoir lui transmettre les informations provenant de cette surveillance. Dans l'exemple représenté sur la figure, les calculateurs C1, C2 et C4 sont reliés audit calculateur central CAL respectivement par l'intermédiaire de liaisons L4, L5 et L6.

Lors d'une panne concernant directement ou indirectement l'un des éléments d'un ensemble, le calculateur dudit ensemble relié au calculateur central transmet à ce dernier une information de panne comportant une indication d'identification IDM désignant l'élément qu'il considère être en panne et une indication d'origine IDS désignant ledit calculateur qui émet l'information de panne.

Lesdits calculateurs C1, C2 et C4 des ensembles E1, E2 et E3 peuvent évidemment transmettre directement les informations appropriées au calculateur central CAL. Toutefois, selon un mode de réalisation particulier, ledit calculateur central CAL peut comporter une mémoire non représentée, dans laquelle sont stockées les différentes informations de panne susceptibles d'être utilisées par ledit calculateur central CAL, les calculateurs C1, C2 et C4 des ensembles E1, E2 et E3 transmettant alors audit calculateur central CAL des signaux codés permettant à ce dernier d'accéder aux informations stockées appropriées.

A partir des informations reçues, ledit calculateur central CAL détermine les éléments réellement en panne.

A cet effet, ledit calculateur central CAL regroupe tout d'abord pour les informations reçues pendant une durée prédéterminée T :
- dans des premiers groupes de données, les informations de panne pour lesquelles l'indication d'identification d'une desdites informations de panne correspond à l'indication d'origine d'une autre desdites informations de panne, en y ajoutant les informations de panne non déjà regroupées pour lesquelles l'indication d'identification correspond à l'indication d'identification d'une desdites informations de panne du groupe ; et
- dans des seconds groupes de données, les informations de panne non regroupées dans lesdits premiers groupes de données pour lesquelles les indications d'identification sont les mêmes.

On définit la durée T, par exemple de façon empirique, en tenant compte des considérations suivantes :
- deux informations de panne, et donc deux pannes, espacées d'un temps supérieur à la durée T sont toujours indépendantes l'une de l'autre ; et
- deux informations de panne espacées d'un temps inférieur ou égal à la durée T sont susceptibles d'être dépendantes l'une de l'autre.

Ledit calculateur central CAL comporte une base de temps intégrée et non représentée permettant de dater les informations reçues et, donc, de sélectionner pour leur analyse celles reçues pendant une durée T.

Chacun desdits premiers et seconds groupes de données ainsi formés comporte des informations de panne ayant pour origine la panne d'un seul et même élément.

Pour chacun de ces premiers et seconds groupes de données et pour chaque information de panne qui n'a pas pu être regroupée, ledit calculateur central CAL détermine ensuite l'élément effectivement en panne qui est à l'origine des informations de panne considérées, cet élément étant :
- pour les informations de panne qui n'ont pas pu être regroupées, l'élément désigné par l'indication d'identification ;
- pour les premiers groupes de données, soit l'élément désigné par l'indication d'identification qui, le cas échéant, ne correspond à aucune indication d'origine du groupe, soit, lorsqu'une information de panne du groupe comporte une indication d'identification et une indication d'origine identiques, l'élément désigné par ces indications identiques ; et
- pour les seconds groupes de données, l'élément désigné de façon commune par les indications d'identification.

Afin de bien expliciter la présente invention, on précisera ci-après quelques exemples de pannes permettant d'illustrer différentes situations susceptibles de se présenter dans la pratique.

On ne s'intéressera à cet effet qu'aux informations transmises par les calculateurs C1, C2 et C4 reliés au calculateur central CAL.

A titre de premier exemple, on suppose que le calculateur C2 est en panne, mais qu'il est toujours en mesure de transmettre des informations. Cette panne affecte directement les calculateurs C1 et C4 par l'intermédiaire des liaisons L2 et L3.

Lesdits calculateurs C1, C2 et C4 transmettent donc, par suite de cette panne, des informations de panne formées d'une indication d'identification IDM et d'une indication d'origine IDS au calculateur central CAL.

Dans ce cas :

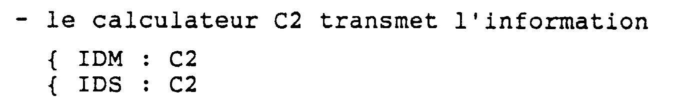

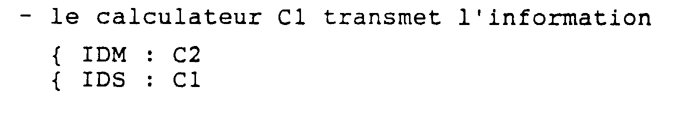

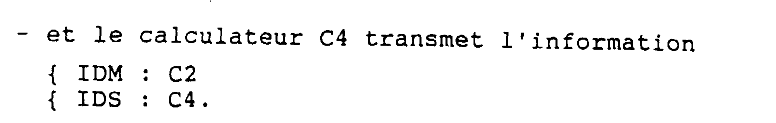

Lesdites informations sont regroupées dans un premier groupe de données puisque l'indication d'identification IDM des informations transmises par les calculateurs C1 et C4 correspond à l'indication d'origine IDS de l'information transmise par le calculateur C2. De plus, comme l'information transmise par ledit calculateur C2 comporte une indication d'identification IDM et une indication d'origine IDS identiques, l'élément désigné par ces indications identiques, c'est-à-dire le calculateur C2, est considéré selon l'invention comme étant l'élément en panne, ce qui correspond bien à l'hypothèse envisagée.

A titre de second exemple, on suppose que le calculateur C2 est en panne et qu'il ne peut plus transmettre d'information au calculateur central CAL. Ladite panne affecte directement les calculateurs C1 et C4 qui eux peuvent bien entendu toujours transmettre des informations audit calculateur central CAL.

Ledit calculateur central CAL reçoit donc : 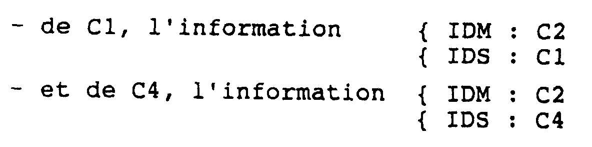 ce qui permet de déterminer l'élément en panne, c'est-à-dire le calculateur C2 désigné de façon commune par toutes les indications d'identification reçues, après regroupement desdites informations dans des seconds groupes de données.

A titre de troisième exemple, on suppose que le composant 3 est en panne.

Dans ce cas, les calculateurs C1 et C4 sont affectés indirectement par cette panne, par l'intermédiaire du calculateur C2.

Le calculateur central CAL reçoit donc les informations suivantes :

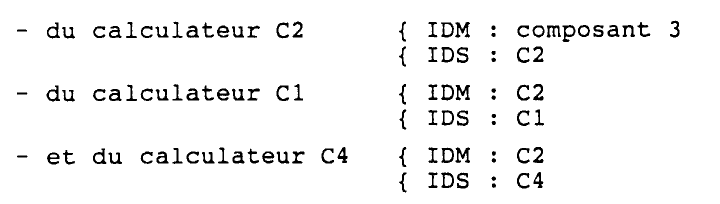

Ces informations sont regroupées dans un premier groupe de données et l'élément en panne est celui désigné par l'indication d'identification IDM qui ne correspond à aucune indication d'origine IDS du groupe, c'est-à-dire le composant 3, ce qui correspond bien à l'hypothèse envisagée.

A titre de quatrième exemple, on suppose que le composant 1 est en panne. Cette panne est directement détectée par le calculateur C1 et elle affecte, d'une part, par l'intermédiaire dudit calculateur C1 le calculateur C2 et, d'autre part, par l'intermédiaire dudit calculateur C2 le calculateur C4.

Aussi, le calculateur central CAL reçoit dans ce cas les informations suivantes :

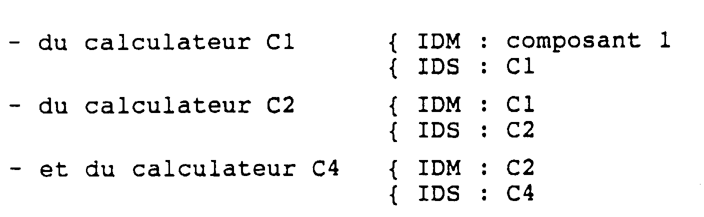

Lesdites informations sont regroupées dans un premier groupe de données et l'élément en panne est celui désigné par l'indication d'identification IDM qui ne correspond à aucune indication d'origine IDS du groupe, c'est-à-dire le composant 1, conformément à l'hypothèse envisagée.

A titre de cinquième et dernier exemple, on suppose que la source d'énergie S1, ou un élément non représenté connecté de manière identique, est en panne. On suppose de plus que la panne de la source d'énergie S1 ne perturbe pas le fonctionnement des calculateurs C1 et C2 reliés à celle-ci, lesdits calculateurs C1 et C2 étant encore suffisamment alimentés en énergie pour assurer leurs fonctions et pouvoir transmettre des informations au calculateur central CAL. La panne de ladite source d'énergie S1 affecte donc directement ces calculateurs C1 et C2, et indirectement le calculateur C4 par l'intermédiaire dudit calculateur C2.

Dans ce cas, le calculateur central CAL reçoit les informations suivantes :

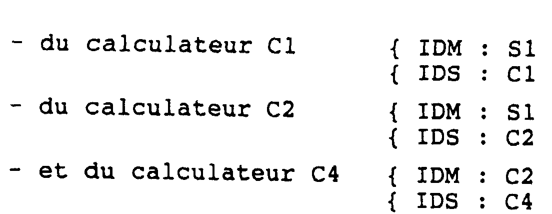

On regroupe dans un premier groupe de données d'abord les informations de panne des calculateurs C2 et C4 puisque l'indication d'identification IDM du calculateur C4 correspond à l'indication d'origine IDS du calculateur C2. Puis on ajoute au groupe ainsi formé l'information de panne du calculateur C1 puisque son indication d'identification IDM correspond à l'indication d'identification IDM du calculateur C2. L'élément en panne dans cet exemple est celui désigné par l'indication d'identification IDM qui ne correspond à aucune indication d'origine IDS du groupe, c'est-à-dire la source d'énergie S1, conformément à l'hypothèse initiale.

On remarquera qu'il peut arriver qu'une information de panne émise ne puisse pas être associée à d'autres informations de panne, par exemple lorsque la panne affecte un calculateur isolé non représenté, uniquement relié au calculateur central CAL. Dans ce cas, l'élément en panne est bien entendu l'élément désigné par l'indication d'identification de ladite information de panne émise, tel que mentionné précédemment.

Le dispositif conforme à l'invention permet de plus d'associer auxdites informations de panne, et donc également à l'élément en panne déterminé de la manière décrite précédemment, des informations opérationnelles. Conformément à l'invention, lors d'une panne, des informations opérationnelles, c'est-à-dire des informations qui sont liées à l'utilisation de différents éléments du système, par exemple des alarmes, sont également transmises du calculateur central CAL.

Selon l'invention, les informations opérationnelles comportent, comme les informations de panne, une indication d'identification et une indication d'origine.

Ledit calculateur central CAL centralise lesdites informations opérationnelles conjointement avec les informations de panne et, pour les informations émises pendant une durée prédéfinie T', ledit calculateur central CAL associe lesdites informations opérationnelles, soit aux informations de panne présentant une même indication d'identification, soit aux informations de panne pour lesquelles l'indication d'origine correspond à l'indication d'identification desdites informations opérationnelles.

Bien entendu, ladite durée prédéfinie T' peut être différente de la durée T précitée utilisée lors du regroupement d'informations de panne. Toutefois, en particulier pour des raisons de similitude des conditions de mise en oeuvre des deux procédés conformes à l'invention, on peut utiliser dans certains cas des durées T et T' identiques.

Dans un but de perfectionnement, chacune desdites informations opérationnelles et de panne peut comporter de plus une indication d'évaluation de panne indiquant l'importance de la panne par rapport au fonctionnement du système. Le calculateur central CAL associe alors une information opérationnelle à une information de panne si, en plus des conditions précitées, les indications d'évaluation de panne respectives sont identiques.

De telles indications d'évaluation de panne permettent de plus à l'utilisateur du système de prendre les mesures réellement adaptées à la situation existante, lesdites indications d'évaluation de panne étant en effet susceptibles d'indiquer par exemple si, par suite de la panne, le système est toujours en mesure d'assurer sa fonction.

Le dispositif conforme à l'invention et décrit précédemment à titre d'exemple apporte donc une aide considérable à la maintenance du système complexe auquel il est associé, en réduisant en particulier la durée et le coût de ladite maintenance.

## Revendications

1. Procédé pour l'identification de pannes dans un système complexe comportant une pluralité d'éléments connectés ensemble, procédé selon lequel :
a) on divise ledit système complexe en une pluralité d'ensembles d'éléments, chacun desdits ensembles étant susceptible d'émettre, lors d'une panne concernant directement ou indirectement au moins l'un des éléments de cet ensemble, une information de panne ;
b) on centralise toutes les informations de panne émises ;
c) on regroupe les informations de panne émises pendant une durée prédéterminée, relatives à un même élément en panne ; et
d) on détermine, pour chacun desdits regroupements effectués, l'élément effectivement en panne qui est à l'origine des informations de panne considérées,
caractérisé :
- en ce que l'information de panne comporte une indication d'identification (IDM), désignant l'élément que l'ensemble considère être en panne, et une indication d'origine (IDS), désignant ledit ensemble d'émission ;
- en ce qu'à l'étape c) :
. on regroupe, respectivement dans des premiers groupes de données, les informations de panne pour lesquelles l'indication d'identification (IDM) d'une desdites informations de panne correspond à l'indication d'origine (IDS) d'une autre desdites informations de panne et, pour chaque premier groupe de données ainsi formé, on y ajoute les informations de panne, non déjà regroupées, pour lesquelles l'indication d'identification (IDM) correspond à l'indication d'identification (IDM) d'une desdites informations de panne du groupe ; et
. on regroupe, respectivement dans des seconds groupes de données, les informations de panne non regroupées dans lesdits premiers groupes de données pour lesquelles les indications d'identification (IDM) sont les mêmes, chacun desdits premiers et seconds groupes de données ainsi formés comportant des informations de panne ayant pour origine la panne d'un seul et même élément ; et
- en ce qu'à l'étape d), l'élément effectivement en panne est :
. pour les informations de panne qui n'ont pas pu être regroupées, l'élément désigné par l'indication d'identification (IDM);
. pour les premiers groupes de données, soit l'élément désigné par l'indication d'identification (IDM) qui, le cas échéant, ne correspond à aucune indication d'origine (IDS) du groupe, soit, lorsqu'une information de panne du groupe comporte une indication d'identification (IDM) et une indication d'origine (IDS) identiques, l'élément désigné par ces indications identiques ; et
. pour les seconds groupes de données, l'élément désigné de façon commune par les indications d'identification (IDM).

2. Procédé selon la revendication 1,
caractérisé en ce que l'on définit ladite durée prédéterminée de manière que les considérations suivantes soient vérifiées :
- deux informations de panne espacées d'un temps supérieur à ladite durée prédéterminée sont toujours indépendantes l'une de l'autre ; et
- deux informations de panne espacées d'un temps inférieur ou égal à ladite durée prédéterminée sont susceptibles d'être dépendantes l'une de l'autre.

3. Procédé pour associer aux informations de panne, utilisées dans le procédé spécifié sous l'une des revendications 1 ou 2 pour l'identification de pannes, des informations opérationnelles correspondantes susceptibles d'être émises par lesdits ensembles d'éléments du système complexe, lesdites informations opérationnelles comportant comme les informations de panne une indication d'identification et une indication d'origine,
caractérisé en ce que :
a) on centralise les informations opérationnelles conjointement avec les informations de panne ; et
b) pour les informations émises pendant une durée prédéfinie, on associe lesdites informations opérationnelles, soit aux informations de panne présentant une même indication d'identification, soit aux informations de panne pour lesquelles l'indication d'origine correspond à l'indication d'identification desdites informations opérationnelles.

4. Procédé selon les revendications 1 et 3,
caractérisé en ce que ladite durée prédéterminée et ladite durée prédéfinie sont identiques.

5. Procédé selon l'une des revendications 3 ou 4,
caractérisé en ce que chacune desdites informations opérationnelles et de panne comporte de plus une indication d'évaluation de panne indiquant l'importance de la panne par rapport au fonctionnement du système, et en ce qu'on associe une information opérationnelle à une information de panne si, en plus des conditions définies dans l'étape b) du procédé spécifié sous la revendication 3, les indications d'évaluation de panne respectives sont identiques.

6. Procédé selon la revendication 5,
caractérisé en ce que l'indication d'évaluation de panne est susceptible d'indiquer deux niveaux de panne différents, dont l'un correspond à une panne majeure, pour laquelle le système n'est plus en mesure d'assurer sa fonction et dont l'autre correspond à une panne mineure, pour laquelle, malgré la panne, le système est encore en mesure d'assurer sa fonction.

7. Dispositif pour la mise en oeuvre de l'un quelconque des procédés spécifiés sous les revendications 1 à 6,
caractérisé en ce qu'il comporte :
- des ensembles d'éléments (E1, E2, E3) comprenant des composants élémentaires (1 à 8) et au moins un calculateur (C1, C2, C3, C4) relié auxdits composants élémentaires, ledit calculateur étant susceptible d'identifier un élément soumis directement ou indirectement à une panne ; et
- un calculateur central (CAL), relié au calculateur (C1, C2, C4) de chacun desdits ensembles (E1, E2, E3) et recevant des informations de panne et éventuellement des informations opérationnelles desdits calculateurs, ledit calculateur central (CAL) regroupant lesdites informations de panne et déterminant à partir de ces informations de panne regroupées les éléments effectivement en panne, et ledit calculateur central (CAL) étant de plus susceptible le cas échéant d'associer des informations opérationnelles à des informations de panne correspondantes.

8. Dispositif selon la revendication 7,
caractérisé en ce que ledit calculateur central (CAL) comporte une mémoire dans laquelle sont stockées les différentes informations de panne susceptibles d'être utilisées par ledit calculateur central, lesdits calculateurs (C1, C2, C4) étant susceptibles de transmettre audit calculateur central (CAL) des signaux codés permettant à ce dernier d'accéder aux informations stockées appropriées.

9. Dispositif selon l'une des revendications 7 ou 8,
caractérisé en ce que ledit calculateur central (CAL) comporte une base de temps pour dater toutes les informations reçues.

## Patentansprüche

1. Verfahren zur Identifizierung von Störungen in einem komplexen System mit einer Vielzahl von zusammengeschalteten Bauelementen, nach dem:
a) das komplexe System in eine Vielzahl von Bauelementegruppen unterteilt wird, wobei jede Gruppe bei einer Störung, von der direkt oder indirekt mindestens eins der Bauelemente dieser Gruppe betroffen ist, eine Störungsinformation abgeben kann;
b) alle abgegebenen Störungsinformationen zentral erfaßt werden;
c) die während einer vorbestimmten Dauer für ein und dasselbe gestörte Bauelement abgegebenen Störungsinformationen zusammengefaßt werden und
d) für jede der durchgeführten Zusammenfassungen das tatsächlich gestörte Bauelement, das den betreffenden Störungsinformationen zugrunde liegt, bestimmt wird,
dadurch gekennzeichnet, daß
- die Störungsinformation eine Identifizierungsmeldung (IDM), die das von der Gruppe für gestört gehaltene Bauelement bezeichnet, und eine Herkunftsmeldung (IDS) zur Bezeichnung der die Störung meldenden Gruppe enthält;
- in der Stufe c) :
. in ersten Datengruppen jeweils die Störungsinformationen zusammengefaßt werden, bei denen die Identifizierungsmeldung (IDM) einer der Störungsinformationen der Herkunftsmeldung (IDS) einer anderen Störungsinformation entspricht, und jeder so gebildeten ersten Datengruppe die noch nicht zusammengefaßten Störungsinformationen zugefügt werden, bei denen die Identifizierungsmeldung (IDM) der Identifizierungsmeldung (IDM) einer der Störungsinformationen der Gruppe entspricht; und
. in zweiten Datengruppen jeweils die nicht in den ersten Datengruppen zusammengefaßten Störungsinformationen mit gleichen Identifizierungsmeldungen (IDM) zusammengefaßt werden, wobei jede so gebildete erste und zweite Datengruppe Störungsinformationen enthält, die durch die Störung ein und desselben Bauelements verursacht werden; und
- dadurch, daß in Stufe d) das tatsächlich gestörte Bauelement:
. bei den Störungsinformationen, die nicht zusammengefaßt werden konnten, das von der Identifizierungsmeldung (IDM) bezeichnete Bauelement ist;
. bei den ersten Datengruppen entweder das von der Identifizierungsmeldung (IDM) bezeichnete Bauelement, das gegebenenfalls keiner Herkunftsmeldung (IDS) der Gruppe entspricht, oder, wenn eine Störungsinformation der Gruppe eine identische Identifizierungsmeldung (IDM) und Herkunftsmeldung (IDS) enthält, das von diesen identischen Meldungen bezeichnete Bauelement ist; und
. bei den zweiten Datengruppen das von den Identifizierungsmeldungen (IDM) gemeinsam bezeichnete Bauelement ist.

2. Verfahren nach Anspruch 1,
dadurch gekennzeichnet, daß die vorbestimmte Dauer so festgelegt wird, daß folgende Überlegungen erfüllt werden:
- Zwei Störungsinformationen, deren zeitlicher Abstand größer als die vorbestimmte Dauer ist, sind stets unabhängig voneinander;
- zwei Störungsinformationen, deren zeitlicher Abstand kleiner oder gleich der vorbestimmten Dauer ist, können voneinander abhängig sein.

3. Verfahren zur Verbindung der Störungsinformationen, die im Verfahren nach einem der Ansprüche 1 oder 2 zur Störungsidentifizierung eingesetzt werden, mit entsprechenden Betriebsinformationen, die von den Bauelementegruppen des komplexen Systems abgegeben werden können, wobei die Betriebsinformationen wie die Störungsinformationen eine Identifizierungsmeldung und eine Herkunftsmeldung enthalten,
dadurch gekennzeichnet, daß
a) die Betriebsinformationen zusammen mit den Störungsinformationen zentral erfaßt werden; und
b) bei den während einer zuvor festgelegten Dauer abgegebenen Informationen die Betriebsinformationen entweder mit den Störungsinformationen mit der gleichen Identifizierungsmeldung oder mit den Störungsinformationen verbunden werden, bei denen die Herkunftsmeldung der Identifizierungsmeldung der Betriebsinformationen entspricht.

4. Verfahren nach den Ansprüchen 1 und 3,
dadurch gekennzeichnet, daß die vorbestimmte Dauer und die zuvor festgelegte Dauer identisch sind.

5. Verfahren nach einem der Ansprüche 3 oder 4,
dadurch gekennzeichnet, daß jede der Betriebs- und Störungsinformationen zudem eine Störungsbewertungsmeldung enthält, die die Bedeutung der Störung für den Betrieb des Systems angibt, und dadurch, daß eine Betriebsinformation mit einer Störungsinformation verbunden wird, wenn zusätzlich zu den Bedingungen von Stufe b) des Verfahrens von Anspruch 3 die jeweiligen Störungsbewertungsmeldungen identisch sind.

6. Verfahren nach Anspruch 5,
dadurch gekennzeichnet, daß die Störungsbewertungsmeldung zwei unterschiedliche Störungsebenen angeben kann, von denen eine einer schweren Störung, bei der das System nicht mehr in der Lage ist, seinen Betrieb zu gewährleisten, und die andere einer leichten Störungen entspricht, bei der das System trotz der Störung weiterhin in der Lage ist, seinen Betrieb zu gewährleisten.

7. Vorrichtung zur Anwendung eines der in den Ansprüchen 1 bis 6 angeführten Verfahren,
dadurch gekennzeichnet, daß sie umfaßt:
- Bauelementegruppen (E1, E2, E3) mit Elementarbauteilen (1 bis 8) und mindestens einem Rechner (C1, C2, C3, C4), der mit den Elementarbauteilen verbunden ist, wobei der Rechner ein Bauelement identifizieren kann, das direkt oder indirekt einer Störung unterliegt; und
- einen Zentralrechner (CAL), der mit dem Rechner (C1, C2, C4) jeder Gruppe (E1, E2, E3) verbunden ist und an den Störungsinformationen und gegebenenfalls Betriebsinformationen der Rechner gelangen, wobei der Zentralrechner (CAL) die Störungsinformationen zusammenfaßt und aus diesen zusammengefaßten Störungsinformationen die tatsächlich gestörten Bauelemente bestimmt und der Zentralrechner (CAL) darüber hinaus gegebenenfalls entsprechenden Störungsinformationen Betriebsinformationen zuordnen kann.

8. Vorrichtung nach Anspruch 7,
dadurch gekennzeichnet, daß der Zentralrechner (CAL) einen Speicher hat, in dem die einzelnen Störungsinformationen, die vom Zentralrechner genutzt werden können, gespeichert werden, wobei die Rechner (C1, C2, C4) dem Zentralrechner (CAL) codierte Signale übermitteln können, durch die dieser auf die gespeicherten zweckdienlichen Informationen zugreifen kann.

9. Vorrichtung nach einem der Ansprüche 7 oder 8,
dadurch gekennzeichnet, daß der Zentralrechner (CAL) einen Zeitgeber zur Datierung aller erhaltenen Informationen hat.

## Claims

1. A process for identifying faults in a complex system containing a plurality of elements connected together, a process according to which:
a) said complex system is divided into a plurality of sets of elements, each of said sets being capable of issuing, upon a fault relating directly or indirectly to at least one of the elements of this set, a fault cue;
b) all the fault cues issued are centralized;
c) the fault cues issued during a predetermined period and which relate to one and the same faulty element are grouped together; and
d) for each of said groupings carried out, the element which is actually faulty and which is at the origin of the relevant fault cues is determined,
characterized in that:
- the fault cue includes an identification indicator (IDM), designating the element which the set regards as being faulty, and an origin indicator (IDS) designating said issuing set;
- in that in step c):
. the fault cues for which the identification indicator (IDM) of one of said fault cues corresponds to the origin indicator (IDS) of another of said fault cues are grouped together, respectively in first data groups, and, for each first data group thus formed, the fault cues, not already grouped together, for which the identification cue (IDM) corresponds to the identification cue (IDM) of one of said fault cues of the group, is added thereto; and
. fault cues which are not grouped together in said first data groups for which the identification indicators (IDM) are the same, are grouped together, respectively in second data groups, each of said first and second data groups thus formed containing fault cues having as origin the fault of one and the same element; and
- in that in step d), the element which is actually faulty is:
. for the fault cues which were not able to be grouped together, the element designated by the identification indicator (IDM) ;
. for the first data groups, either the element designated by the identification indicator (IDM) which, as the case may be, does not correspond to any origin indicator (IDS) of the group, or, when a fault cue of the group contains an identification indicator (IDM) and an origin indicator (IDS) which are identical, the element designated by these identical indicators; and
. for the second data groups, the element designated in a common manner by the identification indicators (IDM).

2. The process as claimed in claim 1,
characterized in that said predetermined period is defined in such a way that the following considerations hold:
- two fault cues separated by a time greater than said predetermined period are always independent of one another; and
- two fault cues separated by a time less than or equal to said predetermined period are capable of being dependent on one another.

3. A process for associating with the fault cues, used in the process specified under either of claims 1 and 2 for identifying faults, corresponding operational cues capable of being issued by said sets of elements of the complex system, said operational cues containing like the fault cues an identification indicator and an origin indicator,
characterized in that:
a) the operational cues are centralized jointly with the fault cues; and
b) for the cues issued during a predefined period, said operational cues are associated, either with the fault cues exhibiting one and the same identification indicator, or with the fault cues for which the origin indicator corresponds to the identification indicator of said operational cues.

4. The process as claimed in claims 1 and 3, characterized in that said predetermined period and said predefined period are identical.

5. The process as claimed in either of claims 3 and 4,
characterized in that each of said operational and fault cues additionally contains a fault evaluation indicator indicating the importance of the fault with respect to the operation of the system, and in that an operational cue is associated with a fault cue if, in addition to the conditions defined in step b) of the process specified under claim 3, the respective fault evaluation indicators are identical.

6. The process as claimed in claim 5,
characterized in that the fault evaluation indicator is capable of indicating two different levels of fault, one of which corresponds to a major fault, for which the system is no longer able to carry out its function and the other of which corresponds to a minor fault, for which, despite the fault, the system is still able to carry out its function.

7. A device for implementing any one of the processes specified under claims 1 to 6,
characterized in that it includes:
- sets of elements (E1, E2, E3) comprising elementary components (1 to 8) and at least one computer (C1, C2, C3, C4) connected to said elementary components, said computer being capable of identifying an element subject directly or indirectly to a fault; and
- a central computer (COMP), connected to the computer (C1, C2, C4) of each of said sets (E1, E2, E3) and receiving fault cues and possibly operational cues from said computers, said central computer (COMP) grouping together said fault cues and determining from these grouped-together fault cues the elements which are actually faulty, and said central computer (COMP) additionally being capable as the case may be of associating operational cues with corresponding fault cues.

8. The device as claimed in claim 7,
characterized in that said central computer (COMP) includes a memory in which are stored the various fault cues capable of being used by said central computer, said computers (C1, C2, C4) being capable of sending coded signals to said central computer (COMP) enabling the latter to access the appropriate stored cues.

9. The device as claimed in either of claims 7 or 8,
characterized in that said central computer (COMP) includes a time base for logging all the cues received.
